# EUROPÄISCHE PATENTSCHRIFT

(11) **EP 1 499 656 B1**
(45) Veröffentlichungstag und Bekanntmachung des Hinweises auf die Patenterteilung: **05.07.2006**
(21) Anmeldenummer: 03720432.8
(22) Anmeldetag: 08.04.2003
(51) Int. Cl.: C08G 69/00

(54) **VERFAHREN ZUR HERSTELLUNG VON POLYAMIDEN**
METHOD FOR PRODUCING POLYAMIDES
PROCEDE DE PRODUCTION DE POLYAMIDES

(30) Priorität: 18.04.2002 DE 10217439
(43) Veröffentlichungstag der Anmeldung: 26.01.2005
(73) Patentinhaber: BASF Aktiengesellschaft, 67056 Ludwigshafen (DE)
(72) Erfinder: WINTERLING, Helmut, 67061 Ludwigshafen (DE); BENISCH, Christoph, 68165 Mannheim (DE); HAHN, Thilo, 55234 Freimersheim (DE)
(86) Internationale Anmeldenummer: PCT/EP2003/003614
(87) Internationale Veröffentlichungsnummer: WO 2003/089496

(56) Entgegenhaltungen:
- WO-A-99/38908
- DE-A- 10 033 544

## Beschreibung

Die vorliegende Erfindung betrifft ein Verfahren zur Herstellung eines Polyamids durch Umsetzung einer Mischung, die ein Monomeres, das eine Nitrilgruppe und mindestens eine weitere zur Bildung einer Carboxamidgruppe fähige funktionelle Gruppe aufweist, und Wasser enthält, in Gegenwart von Titandioxid als Katalysator, dadurch gekennzeichnet, daß das Titandioxid eine BET-Oberfläche, bestimmt gemäß der deutschen Norm DIN 66 131 nach der Mehrpunktmethode mittels des volumetrischen Verfahrens, im Bereich von 5 bis 35 m²/g aufweist.

Polyamide, insbesondere Polyamid 6 und Polyamid 6.6, stellen technisch bedeutsame Polymere dar.

Verfahren zur Herstellung durch Umsetzung einer Mischung, die ein Monomeres, das eine Nitrilgruppe und mindestens eine weitere zur Bildung einer Carboxamidgruppe fähige funktionelle Gruppe aufweist, und Wasser enthält, in Gegenwart von Titandioxid als Katalysator ist bekannt, beispielsweise aus WO 99/38906, WO 99/38908 und WO 01/09224.

Dabei wird in WO 99/38906, WO 99/38908 und WO 01/09224 darauf hingewiesen, daß das Titandioxid eine BET-Oberfläche von mehr als 40 m²/g, vorzugsweise mehr als 100 m²/g aufweisen solle, da bei einer kleiner gewählten BET-Oberfläche das Schüttvolumen höher gewählt werden müsse, um eine ausreichende Katalysatoraktivität zu gewährleisten. Demgemäß werden in WO 99/38906, WO 99/38908 und WO 01/09224 beispielhaft Titandioxide mit BET-Oberflächen von 46, 50, 73 und 116 m²/g erwähnt.

Die in WO 99/38906, WO 99/38908 und WO 01/09224 genannten Verfahren führen zwar zu Polymer mit an sich guten Eigenschaften; wünschenswert ist allerdings eine Verminderung des durch Auflösung des Katalysators bedingten Titandioxid-Gehalts des Polymers, auch wenn dieser Gehalt erheblich niedriger liegt als die Kontamination des Polymers bei der homogenen Katalyse. Je höher der Titandioxid-Gehalt des Polymers liegt, desto höher ist der Verlust an Katalysator pro Mengeneinheit an Polymer. Zur Erzielung einer längeren Katalysator-Standzeit ist eine Verringerung des Titandioxid-Gehalts des Polymers erwünscht.

Der vorliegenden Erfindung lag die Aufgabe zugrunde, ein Verfahren bereitzustellen, daß die Herstellung von Polyamiden durch Umsetzung einer Mischung, die ein Monomeres, das eine Nitrilgruppe und mindestens eine weitere zur Bildung einer Carboxamidgruppe fähige funktionelle Gruppe aufweist, und Wasser enthält, in Gegenwart von Titandioxid als Katalysator auf technisch einfache und wirtschaftliche Weise, insbesondere ohne eine Reduzierung der Katalysatoraktivität gegenüber den aus dem Stand der Technik bekannten Verfahren, unter Vermeidung des genannten Nachteils ermöglicht.

Demgemäß wurde das eingangs definierte Verfahren gefunden.

Unter Polyamiden werden Homopolymere, Copolymere, Mischungen und Pfropfungen von synthetischen langkettigen Polyamiden verstanden, die als wesentlichen Bestandteil wiederkehrend Carboxamid-Gruppen in der Polymer-Hauptkette aufweisen. Beispiele solcher Polyamide sind Nylon 6 (Polycaprolactam), Nylon 6,6 (Polyhexamethylenadipamid), Nylon 4,6 (Polytetramethylenadipamid), Nylon 6,10 (Polyhexamethylensebacamid), Nylon 7 (Polyenantholactam), Nylon 11 (Polyundecanolactam), Nylon 12 (Polydodecanolactam). Diese Polyamide tragen bekanntermaßen den generischen Namen Nylon. Unter Polyamiden werden auch die sogenannten Aramide verstanden (aromatische Polyamide), wie Poly-metaphenylen-isophthalamid (NOMEX® , US-A-3,287,324) oder Poly-paraphenylen-terephthalamid (KEVLAR® , US-A-3,671,542).

Erfindungsgemäß setzt man zur Herstellung des Polyamids eine Mischung ein, die ein Monomeres, das eine Nitrilgruppe und mindestens eine, wie 1, 2, 3, 4, 5, vorzugsweise 1, 2, 3, insbesondere 1, weitere zur Bildung einer Carboxamidgruppe fähige funktionelle Gruppe aufweist, enthält.

Als zur Bildung einer Carboxamidgruppe fähige funktionelle Gruppe kommen vorteilhaft eine Carbonsäuregruppe oder eine funktionelle Gruppe, aus denen in dem erfindungsgemäßen Verfahren ein Carbonsäure-Äquivalent im Sinne der Bildung einer Carboxamid-Gruppe freigesetzt werden kann, wie Nitrilgruppe, Carbonsäureestergruppe, Carbonsäureamidgruppe, oder vorteilhaft eine Amingruppe oder eine funktionelle Gruppe, aus denen in dem erfindungsgemäßen Verfahren ein Amin-Äquivalent im Sinne der Bildung einer Carboxamid-Gruppe freigesetzt werden kann, in Betracht. Weist das Monomer mehrere solcher zur Bildung einer Carboxamidgruppe fähige funktioneller Gruppen auf, so kann das Monomer mehrere gleiche oder unterschiedliche solcher Gruppen tragen. Ebenso kann ein Momoner oder ein Gemisch mehrerer solcher Monomere eingesetzt werden, die im Sinne der vorliegenden Erfindung gleichermaßen als Monomer beschrieben werden.

In einer bevorzugten Ausführungsform kann man ein Monomer ausgewählt aus der Gruppe bestehend aus Dinitril, Nitrilocarbonsäureamid, Nitrilocarbonsäure, Nitrilocarbonsäureester, Aminonitril oder deren Gemische einsetzen. In einer besonders bevorzugten Ausführungsform kommt ein aliphatisches Monomer in Betracht. Dabei haben sich Monomere, bei denen die Nitrilgruppe und die weitere, zur Bildung einer Carboxamid-Gruppe fähige funktionelle Gruppe alpha,omega-ständig sind, insbesondere ein Monomer ausgewählt aus der Gruppe bestehend aus alpha,omega-Dinitril, alpha,omega-Nitrilocarbonsäureamid, alpha,omega-Nitrilocarbonsäure, alpha,omega-Nitrilocarbonsäureester, alpha,omega-Aminonitril oder deren Gemische, als besonders vorteilhaft erwiesen.

Unter den alpha,omega-Aminonitrilen sind solche mit 4 bis 12 C-Atomen, weiter solche mit 4 bis 9 C-Atomen im Alkylenrest, oder ein Aminoalkylenarylennitril mit 8 bis 13 C-Atomen bevorzugt, insbesondere solche, die zwischen der aromatischen Einheit und der Amino- und Nitrilgruppe eine Alkylengruppe mit mindestens einem C-Atom aufweisen. Unter den Aminoalkylenarylennitrilen sind insbesondere solche bevorzugt, die die Amino- und Nitrilgruppe in 1,4-Stellung hinsichtlich des Arylensystems zueinander aufweisen.

Als alpha,omega-Aminonitril setzt man weiter bevorzugt lineare alpha,omega-Aminoalkylennitrile ein, wobei der Alkylenrest (-CH₂-) vorzugsweise 4 bis 12 C-Atome, besonders bevorzugt von 4 bis 9 C-Atome enthält, wie 5-Amino-1-cyanopentan (6-Aminocapronitril), 6-Amino-1-cyanohexan, 7-Amino-1-cyanoheptan, 8-Amino-1-cyanooctan, 9-Amino-1-cyanononan, insbesondere bevorzugt 6-Aminocapronitril.

6-Aminocapronitril erhält man üblicherweise durch Hydrierung von Adipodinitril nach bekannten Verfahren, wie sie beispielsweise in WO 99/38906, WO 99/38908 und WO 01/09224 genannt sind.

Unter den alpha,omega-Dinitrilen sind solche mit 3 bis 11 C-Atomen, weiter solche mit 3 bis 8 C-Atomen im Alkylenrest, oder ein Alkylenarylendinitril mit 7 bis 12 C-Atomen bevorzugt, insbesondere solche, die zwischen der aromatischen Einheit und der Amino- und Nitrilgruppe eine Alkylengruppe mit mindestens einem C-Atom aufweisen. Unter den Alkylenarylendinitril sind insbesondere solche bevorzugt, die die beiden Nitrilgruppen in 1,4-Stellung hinsichtlich des Arylensystems zueinander aufweisen.

Als alpha,omega-Dinitril setzt man weiter bevorzugt lineare alpha,omega-Alkylendinitrile ein, wobei der Alkylenrest (-CH₂-) vorzugsweise 3 bis 11 C-Atome, besonders bevorzugt von 3 bis 8 C-Atome enthält, wie Propan-1,3-dinitril, Butan-1,4-dinitril (Adipodinitril), Pentan-1,5-dinitril, 1,6-Hexan-1,6-dinitril, Heptan-1,7-dinitril, Octan-1,8-dinitril, insbesondere bevorzugt Adipodinitril.

Unter den alpha,omega-Nitrilocarbonsäuren sind solche mit 3 bis 11 C-Atomen, weiter solche mit 3 bis 8 C-Atomen im Alkylenrest, oder eine Nitriloalkylenarylencarbonsäure mit 7 bis 12 C-Atomen bevorzugt, insbesondere solche, die zwischen der aromatischen Einheit und der Carbonsäure- und Nitrilgruppe eine Alkylengruppe mit mindestens einem C-Atom aufweisen. Unter den Nitriloalkylenarylencarbonsäuren sind insbesondere solche bevorzugt, die die Carbonsäure- und Nitrilgruppe in 1,4-Stellung hinsichtlich des Arylensystems zueinander aufweisen.

Als alpha,omega-Nitrilocarbonsäure setzt man weiter bevorzugt lineare alpha,omega-Nitriloalkylencarbonsäuren ein, wobei der Alkylenrest (-CH₂-) vorzugsweise 3 bis 11 C-Atome, besonders bevorzugt von 4 bis 9 C-Atome enthält, wie 5-Nitrilo-1-pentancarbonsäure (5-Cyanovaleriansäure), 6-Nitrilo-1-hexancarbonsäure, 7-Nitrilo-1-heptancarbonsäure, 8-Nitrilo-1-octancarbonsäure, 9-Nitrilo-1-nonancarbonsäure, insbesondere bevorzugt 5-Cyanovaleriansäure.

Unter den alpha,omega-Nitrilocarbonsäureamiden sind solche mit 3 bis 11 C-Atomen, weiter solche mit 3 bis 8 C-Atomen im Alkylenrest, oder ein Nitriloalkylenarylencarbonsäuramid mit 7 bis 12 C-Atomen bevorzugt, insbesondere solche, die zwischen der aromatischen Einheit und der Carbonsäureamid- und Nitrilgruppe eine Alkylengruppe mit mindestens einem C-Atom aufweisen. Unter den Nitriloalkylenarylencarbonsäureamiden sind insbesondere solche bevorzugt, die die Carbonsäureamid- und Nitrilgruppe in 1,4-Stellung hinsichtlich des Arylensystems zueinander aufweisen.

Als alpha, omega-Nitrilocarbonsäureamid setzt man weiter bevorzugt lineare alpha,omega-Nitriloalkylencarbonaäureamide ein, wobei der Alkylenrest (-CH₂-) vorzugsweise 3 bis 11 C-Atome, besonders bevorzugt von 3 bis 8 C-Atome enthält, wie 5-Nitrilo-1-pentancarbonsäureamid (5-Cyanovaleriansäureamid), 6-Nitrilo-1-hexancarbonsäureamid, 7-Nitrilo-1-heptancarbonsäureamid, 8-Nitrilo-1-octancarbonsäureamid, 9-Nitrilo-1-nonancarbonsäureamid, insbesondere bevorzugt 5-Cyanovaleriansäureamid.

Unter den alpha, omega-Nitrilocarbonsäureestern sind in der alpha,omega-Nitrilocarbonsäure-Komponente die bereits genannten Nitrilocarbonsäuren bevorzugt.

Als Alkoholkomponente des Esters sind C1-C4-Alkylester bevorzugt, wie Methyl, Ethly, n-Propyl, i-Propyl, n-Butyl, i-Butyl, s-Butyl, t-Butyl, insbesondere Methyl.

Bevorzugt kommen 5-Nitrilo-1-pentancarbonsäureester (5-Cyanovaleriansäureester), 6-Nitrilo-1-hexancarbonsäureester, 7-Nitrilo-1-heptancarbonsäureester, 8-Nitrilo-1-octancarbonsäureester, 9-Nitrilo-1-nonancarbonsäureester, insbesondere bevorzugt 5-Cyanovaleriansäuremethylester, in Betracht.

Besonders bevorzugt können solche Monomere eingesetzt werden, die zur Bildung von Polyamid 6, Polyamid 6.6 oder deren Copolymere geeignet sind, wie Adipodinitril, 5-Cyanovaleriansäureamid, 5-Cyanovaleriansäure, Cyanovaleriansäure-C₁-C₄-alkylester, 6-Aminocapronitril oder deren Gemische, insbesondere Adipodinitril, 5-Cyanovaleriansäureamid, 5-Cyanovaleriansäure, 6-Aminocapronitril oder deren Gemische, insbesondere bevorzugt 6-Aminocapronitril, Adipodinitril oder deren Gemische.

Setzt man als Monomer eine Verbindung ein, in denen das Verhältnis der molaren Summe aus der einen Nitrilgruppe, und der funktionellen Gruppen, aus denen in dem erfindungsgemäßen Verfahren ein Carbonsäure-Äquivalent im Sinne der Bildung einer Carboxamid-Gruppe freigesetzt werden kann einschließlich der Carbonsäure-Gruppen selbst, zu der molaren Summe der Aminogruppen und der funktionellen Gruppen, aus denen in dem erfindungsgemäßen Verfahren ein Amino-Äquivalent im Sinne der Bildung einer Carboxamid-Gruppe freigesetzt werden kann, außerhalb des Bereichs von 0,9:1 bis 1:0,9 liegt, wie beispielsweise im Falle von Adipodinitril, 5-Cyanovaleriansäure, 5-Cyanovaleriansäureamid und 5-Cyanovaleriansäurealkylester, in denen das Verhältnis der beiden molaren Summen zueinander 2:0 beträgt, kommt vorteilhaft eine derartige Zugabe von solchen zur Bildung von Polyamiden geeigneten Verbindungen in Betracht, daß das Verhältnis der molaren Summe aus der einen Nitrilgruppe, und der funktionellen Gruppen, aus denen in dem erfindungsgemäßen Verfahren ein Carbonsäure-Äquivalent im Sinne der Bildung einer Carboxamid-Gruppe freigesetzt werden kann einschließlich der Carbonsäure-Gruppen selbst, zu der molaren Summe der Aminogruppen und der funktionellen Gruppen, aus denen in dem erfindungsgemäßen Verfahren ein Amino-Äquivalent im Sinne der Bildung einer Carboxamid-Gruppe freigesetzt werden kann, in den Bereich von 0,9:1 bis 1:0,9 verschoben wird.

Im Falle eines Monomers ausgewählt aus der Gruppe bestehend aus Dinitril, Nitrilocarbonsäureamid, Nitrilocarbonsäure, Nitrilocarbonsäureester oder deren Gemische kommt vorteilhaft die Zugabe eines mehrwertigen, wie zwei-, drei- oder vierwertigen, insbesondere zweiwertigen Amins (also eines Diamins), vorzugsweise im Falle eines Diamins in einem molaren Verhältnis von dem genannten Monomer zu Diamin in einem Molverhältnis im Bereich von 0,9:1 bis 1:0,9, insbesondere 0,95:1 bis 1:0,95 in Betracht.

Als Diamine können einzeln oder im Gemisch prinzipiell alle Diamine eingesetzt werden. Unter diesen sind die alpha,omega-Diamine bevorzugt, wobei unter letzteren solche mit 2 bis 12 C-Atomen, weiter solche mit 2 bis 10 C-Atomen im Alkylenrest, oder ein Alkylenarylendiamin mit 8 bis 13 C-Atomen bevorzugt, insbesondere solche, die zwischen der aromatischen Einheit und den beiden Aminogruppen eine Alkylengruppe mit mindestens einem C-Atom aufweisen. Unter den Alkylenarylendiaminen sind insbesondere solche bevorzugt, die die beiden Aminogruppen in 1,4-Stellung hinsichtlich des Arylensystems zueinander aufweisen.

Als alpha,omega-Diamin setzt man weiter bevorzugt lineare alpha,omega-Alkylendiamine ein, wobei der Alkylenrest (-CH₂-) vorzugsweise 2 bis 12 C-Atome, besonders bevorzugt von 2 bis 10 C-Atome enthält, wie 1,2-Diaminoethan, 1,3-Diaminopropan, 1,4-Diaminobutan, 1,5-Diaminopentan, 1,6-Diaminohexan (Hexamethylendiamin), 1,7-Diaminoheptan, 1,8-Diaminooctan, 1,9-Diaminononan, 1,10-Diaminodecan, insbesondere bevorzugt Hexamethylendiamin.

Weiter bevorzugt sind als alpha,omega-Diamine alpha,omega-Alkylendiamine, wobei der Alkylenrest vorzugsweise 2 bis 12 C-Atome, besonders bevorzugt von 2 bis 10 C-Atome enthält, und mindestens ein Kohlenstoffatom der Alkylenkette substituiert ist, vorzugsweise durch einen C₁-C₄-Alkylrest, wie Methyl, Ethyl, n-Propyl, i-Propyl, n-Butyl, i-Butyl, s-Butyl, t-Butyl, insbesondere Methyl, substituiert ist, wie 2-Methyl-1,5-diaminopentan. 2-Methyl-1,5-diaminopentan ist beispielsweise erhältlich durch Hydrierung des bei der Herstellung von Adipodinitril durch doppelte Hydrocyanierung von Butadien anfallenden Nebenprodukts 2-Methylglutarodinitril.

Zusätzlich zu dem Monomeren, das eine Nitrilgruppe und mindestens eine weitere zur Bildung einer Carboxamidgruppe fähige funktionelle Gruppe aufweist, können weitere Verbindungen, die bekanntermaßen zur Herstellung von Polyamiden als Monomer eingesetzt werden können, vorzugsweise ausgewählt aus der Gruppe bestehend aus Lactamen, omega-Aminocarbonsäuren, omega-Aminocarbonsäureamiden, omega-Aminocarbonsäuresalze, omega-Aminocarbonsäureester, äquimolaren Mischungen aus Diaminen und Dicarbonsäuren, Dicarbonsäure/Diamin-Salzen oder Gemische solcher Monomere, eingesetzt werden.

Als solche zusätzliche Verbindungen kommen
Monomere oder Oligomere eines C₂ - bis C₂₀ - vorzugsweise C₂ - bis C₁₈ - arylaliphatischen oder vorzugsweise aliphatischen Lactams , wie Enantholactam, Undecanolactam, Dodecanolactam oder Caprolactam, insbesondere Caprolactam,
Monomere oder Oligomere von C₂ - bis C₂₀ -, vorzugsweise C₃ - bis C₁₈ - Aminocarbonsäuren, wie 6-Aminocapronsäure, 11-Aminoundecansäure, sowie deren Salze, wie Alkalisalze, beispielsweise Lithium-, Natrium-, Kalium-Salze,
Monomere oder Oligomere von C₂ - bis C₂₀ - Aminosäureamiden, wie 6-Aminocapronsäureamid, 11-Aminoundecansäureamid,
Monomere oder Oligomere von Estern, vorzugsweise C₁-C₄-Alkylester, wie Methyl-, Ethyl-, n-Propyl-, i-Propyl-, n-Butyl-, i-Butyl-, s-Butyl-ester, von C₂ - bis C₂₀ -, vorzugsweise C₃ - bis C₁₈ - Aminocarbonsäuren, wie 6-Aminocapronsäureester, beispielsweise 6-Aminocapronsäuremethylester, 11-Aminoundecansäureester, beispielsweise 11-Aminoundecansäuremethylester,
Monomere oder Oligomere eines C₂ - bis C₂₀ -, vorzugsweise C₂ - bis C₁₂ - Alkyldiamins, wie Tetramethylendiamin oder vorzugsweise Hexamethylendiamin,
mit einer C₂ - bis C₂₀ -, vorzugsweise C₂ - bis C₁₄ - aliphatischen Dicarbonsäure, wie Sebacinsäure, Decandicarbonsäure oder Adipinsäure,
Monomere oder Oligomere eines C₂ - bis C₂₀ -, vorzugsweise C₂ - bis C₁₂ - Alkyldiamins, wie Tetramethylendiamin oder vorzugsweise Hexamethylendiamin,
mit einer C₈ - bis C₂₀ -, vorzugsweise C₈ - bis C₁₂ - aromatischen Dicarbonsäure oder deren Derivate , beispielsweise Chloride, wie 2,6-Naphthalindicarbonsäure, vorzugsweise Isophthalsäure oder Terephthalsäure,
Monomere oder Oligomere eines C₂ - bis C₂₀ -, vorzugsweise C₂ - bis C₁₂ - Alkyldiamins, wie Tetramethylendiamin oder vorzugsweise Hexamethylendiamin,
mit einer C₉ - bis C₂₀ -, vorzugsweise C₉ - bis C₁₈ - arylaliphatischen Dicarbonsäure oder deren Derivate, beispielsweise Chloride, wie o-, m- oder p-Phenylendiessigsäure,
Monomere oder Oligomere eines C₆ - bis C₂₀ -, vorzugsweise C₆ - bis C₁₀ - aromatischen Diamins, wie m- oder p-Phenylendiamin,
mit einer C₂ - bis C₂₀ -, vorzugsweise C₂ - bis C₁₄ - aliphatischen Dicarbonsäure, wie Sebacinsäure, Decandicarbonsäure oder Adipinsäure,
Monomere oder Oligomere eines C₆ - bis C₂₀ - vorzugsweise C₆ - bis C₁₀ - aromatischen Diamins, wie m- oder p-Phenylendiamin,
mit einer C₈ - bis C₂₀ -, vorzugsweise C₈ - bis C₁₂ - aromatischen Dicarbonsäure oder deren Derivate , beispielsweise Chloride, wie 2,6-Naphthalindicarbonsäure, vorzugsweise Isophthalsäure oder Terephthalsäure,
Monomere oder Oligomere eines C₆ - bis C₂₀ - vorzugsweise C₆ - bis C₁₀ - aromatischen Diamins, wie m- oder p-Phenylendiamin,
mit einer C₉ - bis C₂₀ -, vorzugsweise C₉ - bis C₁₈ - arylaliphatischen Dicarbonsäure oder deren Derivate, beispielsweise Chloride, wie o-, m- oder p-Phenylendiessigsäure,
Monomere oder Oligomere eines C₇ - bis C₂₀ -, vorzugsweise C₈ - bis C₁₈ - arylaliphatischen Diamins, wie m- oder p-Xylylendiamin,
mit einer C₂ - bis C₂₀ -, vorzugsweise C₂ - bis C₁₄ - aliphatischen Dicarbonsäure, wie Sebacinsäure, Decandicarbonsäure oder Adipinsäure,
Monomere oder Oligomere eines C₇ - bis C₂₀ -, vorzugsweise C₈ - bis C₁₈ - arylaliphatischen Diamins, wie m- oder p-Xylylendiamin,
mit einer C₆ - bis C₂₀ -, vorzugsweise C₆ - bis C₁₀ - aromatischen Dicarbonsäure oder deren Derivate , beispielsweise Chloride, wie 2,6-Naphthalindicarbonsäure, vorzugsweise Isophthalsäure oder Terephthalsäure,
Monomere oder Oligomere eines C₇ - bis C₂₀ -, vorzugsweise C₈ - bis C₁₈ - arylaliphatischen Diamins, wie m- oder p-Xylylendiamin,
mit einer C₉ - bis C₂₀ -, vorzugsweise C₉ - bis C₁₈ - arylaliphatischen Dicarbonsäure oder deren Derivate, beispielsweise Chloride, wie o-, m- oder p-Phenylendiessigsäure,
sowie Homopolymere, Copolymere, Mischungen und Pfropfungen solcher Monomere oder Oligomere in Betracht.

Als Oligomere können vorteilhaft Dimere, Trimere, Tetramere, Pentamere oder Hexamere solcher Monomere oder von Gemischen solcher Monomere eingesetzt werden.

Bevorzugt sind dabei solche zusätzliche Verbindungen, die bei der Polymerisation zu den Polyamiden Nylon 6, Nylon 6,6, Nylon 4,6, Nylon 6,10, Nylon 7, Nylon 11, Nylon 12 und den Aramiden Poly-metaphenylen-isophthalamid oder Poly-paraphenylen-terephthalamid, insbesondere zu Nylon 6 und Nylon 66, führen, wie Caprolactam, Adipinsäure und Hexamethylendiamin.

Lactame können durch Umsetzung eines cyclischen Ketons mit Hydroxylamin zu dem entsprechenden Oxim und anschließende Beckmann-Umlagerung erhalten werden oder aus den entsprechenden Aminonitrilen durch hydrolytische Cyclisierung vor oder während der Polymerisation, insbesondere in Gegenwart von Katalysatoren, wie Titandioxid, in an sich bekannter Weise erhalten werden.
Die Herstellung von omega-Aminocarbonsäuren, omega-Aminocarbonsäureamiden, omega-Aminocarbonsäuresalze, omega-Aminocarbonsäureester ist an sich bekannt. Sie können beispielsweise aus den entsprechenden Aminonitrilen vor oder während der Polymerisation erhalten werden.

Die Herstellung von Dicarbonsäuren ist an sich bekannt. Sie können beispielsweise aus den entsprechenden Dinitrilen vor oder während der Polymerisation erhalten werden.

Die Herstellung von Diaminen kann in an sich bekannter Weise, wie durch Hydrierung der entsprechenden Dinitrile, erfolgen.

Weiterhin kann man die Umsetzung vorteilhaft unter Zusatz an sich bekannter Kettenregler, beispielsweise Monocarbonsäuren, vorzugsweise C₁-C₁₀-Alkanmonocarbonsäuren, wie Essigsäure oder Propionsäure, vorzugsweise C₅-C₈-Cycloalkanmonocarbonsäuren, wie Cyclopentancarbonsäure, Cyclohexancarbonsäure, vorzugsweise Benzol- und Naphthalinmonocarbonsäuren, wie Benzoesäure, Naphthalincarbonsäure, beispielsweise Dicarbonsäuren, vorzugsweise C₂-C₁₀-Alkandicarbonsäuren, wie Adipinsäure, Azelainsäure, Sebacinsäure oder Decandicarbonsäure, vorzugsweise C₅-C₈-Cycloalkandicarbonsäuren, wie 1,4-Cyclohexancarbonsäure, vorzugsweise Benzol- und Naphthalindicarbonsäuren, wie Isophthalsäure, Terephthalsäure, 2,6-Naphthalindicarbonsäure, beispielsweise Monoamine, vorzugsweise C₁-C₁₀-Alkanmonoamine, vorzugsweise C₅-C₈-Cycloalkanmonoamine, wie Cyclopentanamin, Cyclohexanamin, 4-Amino-2,2,6,6-Tetramethylpiperidin, beispielsweise Benzol- und Naphthalinmonoamin, wie Anilin, Naphthalinamin, beispielsweise Diamine, vorzugsweise C₂-C₁₀-Alkandiamine, wie Hexamethylendiamin, vorzugsweise C₅-C₈-Cycloalkandiamine, wie 1,4-Cyclohexandiamin, vorzugsweise Benzol-, Naphthalin- und Xylylidendiamine, wie o-Xylylydendiamin, m-Xylylydendiamin, p-Xylylidendiamin, oder Gemische solcher an sich bekannter Kettenregler durchgeführt werden. Solche Kettenregler können in an sich bekannter Weise vorzugsweise in Mengen im Bereich von 1 bis 55, besonders bevorzugt 1 bis 30, insbesondere 1 bis 15 µg/g Polyamid eingesetzt werden.

Erfindungsgemäß setzt man eine Mischung ein, die ein Monomeres, das eine Nitrilgruppe und mindestens eine weitere zur Bildung einer Carboxamidgruppe fähige funktionelle Gruppe aufweist, und Wasser enthält.

Das molare Verhältnis von Monomer, einschließlich etwaig zugegebener zusätzlicher zur Polyamid-Bildung fähiger Verbindungen, zu Wasser sollte vorteilhaft im Bereich von 1:1 bis 1:20, vorzugsweise 1:2 bis 1:15, insbesondere 1:2 bis 1:10 betragen.

In einer bevorzugten Ausführungsform sollte die Mischung als Monomer nur 6-Aminocapronitril enthalten und das molare Verhältnis von 6-Aminocapronitril zu Wasser vorteilhaft im Bereich von 1:1 bis 1:20, vorzugsweise 1:2 bis 1:15, insbesondere 1:2 bis 1:10 liegen.

In einer weiteren bevorzugten Ausführungsform sollte die Mischung als Monomer nur Adipodinitril und Hexamethylendiamin enthalten und das molare Verhältnis der Mol-Summe aus Adipodinitril und Hexamethylendiamin zu Wasser vorteilhaft im Bereich von 1:1 bis 1:20, vorzugsweise 1:2 bis 1:15, insbesondere 1:2 bis 1:10 liegen.

In einer weiteren bevorzugten Ausführungsform sollte die Mischung als Monomer nur 6-Aminocapronitril, Adipodinitril und Hexamethylendiamin enthalten und das molare Verhältnis der Summe aus 6-Aminocapronitril, Adipodinitril und Hexamethylendiamin zu Wasser vorteilhaft im Bereich von 1:1 bis 1:20, vorzugsweise 1:2 bis 1:15, insbesondere 1:2 bis 1:10 liegen.

Für die erfindungsgemäße Umsetzung der Mischung zu einem Polyamid können dabei das Monomer und das Wasser zusammen oder getrennt der Reaktionsvorrichtung zugeführt werden.

Erfindungsgemäß führt man die Herstellung eines Polyamids in Gegenwart von Titandioxid als Katalysator durch, wobei das Titandioxid eine BET-Oberfläche, bestimmt gemäß der deutschen Norm DIN 66. 131 nach der Mehrpunktmethode mittels des volumetrischen Verfahrens, im Bereich von 5 bis 35 m²/g , vorzugsweise im Bereich von 15 bis 35 m²/g aufweist.

Vorteilhaft sollte das Titandioxid vollständig in der Anatas-Form vorliegen; nach bisherigen Beobachtungen kann das Titandioxid auch in Mengen von 0 bis 30 Gew.-%, vorteilhaft 20-30 Gew.-%, bezogen auf insgesamt eingesetztes Titandioxid, aus Rutil (Rest Anatas) bestehen.

Das Titandioxid kann vorzugsweise in Gestalt von Formkörpern, wie Stränge oder Granulat, eingesetzt werden. Besonders bevorzugt wird ein Granulat mit einer mittleren Länge von 5 bis 20 mm, insbesondere etwa 10 mm, und einem mittleren Durchmesser von 1 bis 6 mm, insbesondere etwa 4 mm.

Die Schneidhärte ist an sich nicht kritisch und kann im Bereich kleiner Werte, wie von 2 N bis 10 N, mittlerer Werte, wie größer 10 N bis 20 N, oder auch hoher Werte, wie größer 20 N oder größer 25 N, liegen.

Die Katalysatoren können aus handelsüblichen Titandioxid-Pulvern hergestellt werden. Dabei kann ein Teil des Titandioxids durch andere Oxide, wie Wolframoxid ersetzt werden. Im Falle von Wolframoxid kommen vorteilhaft Mengen von bis zu 40 Gew.-%, vorzugsweise bis zu 30 Gew.-%, insbesondere 15-25 Gew.-%, jeweils bezogen auf die Summe an Titandioxid und Wolframoxid, in Betracht.

Die Konfektionierung der Katalysatoren kann nach an sich bekannten Verfahren erfolgen, wie sie beispielsweise in Ertl, Knözinger, Weitkamp: "Handbook of heterogeneous catalysis", VCH Weinheim, 1997, Seiten 98ff beschrieben sind.

Die Umsetzung gemäß erfindungsgemäßem Verfahren kann diskontinuierlich, vorzugsweise kontinuierlich durchgeführt werden.

Im Falle einer kontinuierlichen Verfahrensweise kann die Umsetzung in für die Herstellung von Polyamiden an sich bekannten Reaktoren, wie einem oder mehreren Strömungsrohren, einem oder mehreren Rührkesseln oder Kombinationen solcher Vorrichtungen durchgeführt werden.

In einer bevorzugten Ausführungsform kann die Umsetzung gemäß erfindungsgemäßem Verfahren in mindestens einem Strömungsrohr durchgeführt und das als Katalysator verwendete Titandioxid in der Gestalt von Formkörpern in Kombination mit metallischen Füllkörpern eingesetzt werden.

Die metallischen Füllkörper sind vorzugsweise aus korrosionsbeständigem Metallen, insbesondere korrosionsbeständigem Stahl aufgebaut. Die Füllkörper können dabei jede geeignete Geometrie haben. Besonders bevorzugt handelt es sich um Rachig-Ringe. Die Raschig-Ringe weisen dabei vorzugsweise einen mittleren Durchmesser im Bereich von 2 bis 6 mm, vorzugsweise von etwa 3 mm auf.

Die Größe der Titandioxid-Formkörper, vorzugsweise des Titandioxid-Granulats, sollte vorteilhaft so gewählt werden, daß zum einen eine mechanische Abtrennung der Formkörper durch Filter und Siebe problemlos möglich ist, zum anderen der durch den Strömungswiderstand hervorgerufene Druckaufbau aufgrund der erhöhten Festkörperdichte im Reaktor technisch kontrollierbar bleibt. Die mittlere Schüttdichte im Strömungsrohr-Reaktor kann durch ein geeignetes Verhältnis von Titandioxid-Formkörper zu metallischem Füllkörper eingestellt werden. Dabei können im Strömungsrohr auch Gemische aus Titandioxid-Formkörpern und metallischen Füllkörpern vorliegen. Vorzugsweise sind die Titandioxid-Formkörper und die metallischen Füllkörper im Strömungsrohr geschichtet. Dabei kann vorteilhaft in Strömungsrichtung auf eine Schicht Titandioxid-Formkörper eine Schicht metallischer Füllkörper folgen. Es kann auch eine abwechselnde Schichtfolge beider Formkörper mit 2 bis 20, vorzugsweise 3 bis 15 Schichten vorliegen.

In einer weiteren besonders bevorzugten Ausführungsform kann die Umsetzung gemäß erfindungsgemäßem Verfahren in mindestens einem Strömungsrohr durchgeführt und das als Katalysator verwendete Titandioxid in der Gestalt von Formkörpern in Kombination mit an das Strömungsrohr befestigten, den Katalysator tragenden Einbauten eingesetzt werden. Solche Katalysator tragende Einbauten können sich über den gesamten Rohrquerschnitt oder nur über Teile des Rohrquerschnitts, wie ein Segment oder einen Kreisring, erstrecken. Die Einbauten können dabei jede geeignete Geometrie haben. Vorteilhaft kommen beispielsweise Netze, Lochbleche oder perforierte Flächengebilde, wie Folien oder Bleche, in Betracht.

Die Einbauten sind vorzugsweise aus korrosionsbeständigem Metallen, insbesondere korrosionsbeständigem Stahl aufgebaut.

Die Größe der Titandioxid-Formkörper, vorzugsweise des Titandioxid-Granulats, sollte vorteilhaft so gewählt werden, daß zum einen eine mechanische Abtrennung der Formkörper durch Filter und Siebe problemlos möglich ist, zum anderen der durch den Strömungswiderstand hervorgerufene Druckaufbau aufgrund der erhöhten Festkörperdichte im Reaktor technisch kontrollierbar bleibt. Die mittlere Schüttdichte im Strömungsrohr-Reaktor kann durch ein geeignetes Verhältnis von Titandioxid-Formkörper zu den Katalysator tragenden Einbauten eingestellt werden.

Die erfindungsgemäße Verfahren zur Herstellung eines Polyamids durch Umsetzung einer Mischung, die ein Monomeres, das eine Nitrilgruppe und mindestens eine weitere zur Bildung einer Carboxamidgruppe fähige funktionelle Gruppe aufweist, und Wasser enthält, kann in einer oder in mehreren, wie zwei, drei oder vier Stufen erfolgen, die sich in den Verfahrensparametern, wie Druck und Temperatur, unterscheiden können. Zwischen den einzelnen Stufen kann der bei der Reaktion entstehende Ammoniak vorteilhaft abgetrennt werden.

Verfahren zur Herstellung eines Polyamids durch Umsetzung einer Mischung, die ein Monomeres, das eine Nitrilgruppe und mindestens eine weitere zur Bildung einer Carboxamidgruppe fähige funktionelle Gruppe aufweist, und Wasser enthält, in Gegenwart von Titandioxid als Katalysator sind an sich bekannt, beispielsweise aus WO 99/38906, WO 99/38908 und WO 01/09224, deren Inhalt hiermit in die vorliegende Beschreibung inkorporiert wird ("incorporation by reference").
Der Vorteil des erfindungsgemäßen Verfahrens gegenüber den in WO 99/38906, WO 99/38908 und WO 01/09224 beschriebenen ist dabei bereits dadurch erzielbar, daß in einer Stufe der in WO 99/38906, WO 99/38908 und WO 01/09224 beschriebenen Stufen das dort eingesetzte Titandioxid durch ein solches gemäß vorliegender Erfindung ausgetauscht wird. In einer besonders vorteilhaften Ausführungsform sollte das gesamte in den Verfahren gemäß WO 99/38906, WO 99/38908 und WO 01/09224 als Katalysator eingesetzte Titandioxid durch ein solches gemäß vorliegender Erfindung ausgetauscht werden.

Bei ansonsten gleichen Verfahrensparametern, wie Druck, Temperatur, Stoffströmen, Konzentrationen, Einsatzstoffen, führt das erfindungsgemäße Verfahren gegenüber den Verfahren gemäß WO 99/38906, WO 99/38908 und WO 01/09224 zu einem Polyamid mit reduziertem Titandioxid-Gehalt.

Überraschenderweise zeigt sich dabei, daß die im Stand der Technik behauptete Reduzierung der Katalysatoraktivität bei der BET-Oberfläche des Katalysators gemäß vorliegender Erfindung nicht eintritt, sondern die Katalysatoraktivität in dem erfindungsgemäßen Verfahren gleich hoch ist wie in den in WO 99/38906, WO 99/38908 und WO 01/09224 beschriebenen Verfahren.

### Beispiele

Sämtliche Beispiele und Vergleichsbeispiele wurden in einer mehrstufigen Anlage durchgeführt, wie sie schematisch in WO 99/38908, Fig. 1, dargestellt ist.

Als Reaktor (1) wurde ein Rohr mit einem Leervolumen von 60 Litern und einer Innenlänge von 5 m verwendet.

Als Stufe (2) wurde ein 100 1 fassender Zentrifugalabscheider eingesetzt.

Als Stufe (3) wurde ein mit Raschig-Ringen (Durchmesser 6 mm, Länge 6 mm) gefülltes Rohr mit einem Leervolumen von 30 Litern und einer Innenlänge von 2,5 m verwendet.

Als Stufe (4) wurde ein Zentrifugalabscheider mit einem Volumen von 264 Litern eingesetzt, aus dem die Polymerschmelze mit Hilfe einer Zahnradpunpe strangförmig ausgefahren wurde (A).

Es wurden folgende Verfahrensparameter eingestellt:

**Stufe (1):**

| | |
|---|---|
| Massestrom: | 20 kg/h |
| 6-Aminocapronitril/Wasser: | 1:6 mol/mol |
| Druck: | 80 bar |
| Temperatur: | 240°C |

**Stufe (2):**

| | |
|---|---|
| Stand: | 15 % |
| Druck: | 30 bar |
| Temperatur: | 250°C |

**Stufe (3)**

| | |
|---|---|
| Wasserzusatz: | 10 Gew.-%, bezogen auf Stoffstrom in Stufe (1) |
| Druck: | 45 bar |
| Temperatur: | 250°C |

**Stufe 4**

| | |
|---|---|
| Stand: | 25 % |
| Druck: | 1 bar |
| Temperatur: | 260°C |

Es wurden in Stufe (1) folgende Katalysatoren eingesetzt:

### Vergleichsbeispiel 1

Stufe (1) wurde vollständig mit einem Titandioxid mit einer BET-Oberfläche von 50 m²/g, einer Stranglänge im Bereich von 2 bis 14 mm und einer Strangdicke von 4 mm gemäß WO 99/38908, Seite 29, Zeile 28-31, gefüllt.

### Beispiel 1

Das in Vergleichsbeispiel 1 verwendete Titandioxid-Granulat wurde vor dem Einbau 20 Stunden bei 500°C getempert und wies eine BET-Oberfläche von 30 m²/g auf.

### Beispiel 2

Stufe (1) wurde in fünf gleichlange Segmente mit einer Länge von jeweils 1 m unterteilt, an deren Eingang sich jeweils ein Sieb aus Edelstahl (1.4571), (Maschenweite 2 mm) befand. Jedes Segment wurde mit dem Katalysator gemäß Beispiel 1 vollständig gefüllt und die Segmente zusammengesetzt, so daß die Stufe (1) gemäß Beispiel 2 die gleiche Geometrie wie Stufe (1) gemäß Beispiel 1 und Vergleichsbeispiel 1 aufwies.

Es wurden folgende Ergebnisse erhalten:

**Tabelle 1**

| | Titandioxid-Gehalt des Polymers [Gew.-ppm ; bestimmt als Titan] | | | | |
|---|---|---|---|---|---|
| | Nach 24 h | Nach 48 h | Nach 96 h | Nach 144 h | Nach 240 h |
| Beispiel 1 | 3 | 2 | 2 | 1 | 1 |
| Beispiel 2 | 2 | 1 | -- | -- | -- |
| Vgl.-Bsp.1 7 | | 6 | 5 | 4 | 4 |

| | | | | | |
|---|---|---|---|---|---|
| "--": Unterhalb der Nachweisgrenze von 1 ppm | | | | | |

## Patentansprüche

1. Verfahren zur Herstellung eines Polyamids durch Umsetzung einer Mischung, die ein Monomeres, das eine Nitrilgruppe und mindestens eine weitere zur Bildung einer Carboxamidgruppe fähige funktionelle Gruppe aufweist, und Wasser enthält, in Gegenwart von Titandioxid als Katalysator, **dadurch gekennzeichnet, daß** das Titandioxid eine BET-Oberfläche, bestimmt gemäß der deutschen Norm DIN 66 131 nach der Mehrpunktmethode mittels des volumetrischen Verfahrens, im Bereich von 5 bis 35 m²/g aufweist.

2. Verfahren nach Anspruch 1, wobei das Titandioxid eine BET-Oberfläche im Bereich von 15 bis 35 m²/g aufweist.

3. Verfahren nach Anspruch 1 oder 2, wobei das Monomere eine Nitrilgruppe und als mindestens eine weitere zur Bildung einer Carboxamidgruppe fähige funktionelle Gruppe mindestens eine Gruppe ausgewählt aus der Gruppe bestehend aus Nitrilgruppe, Carbonsäureamidgruppe, Carbonsäuregruppe, Estergruppe und Aminogruppe aufweist.

4. Verfahren nach Anspruch 1 oder 2, wobei das Monomer ausgewählt ist aus der Gruppe bestehend aus Dinitril, Nitrilocarbonsäureamid, Nitrilocarbonsäure, Nitrilocarbonsäureester, Aminonitril oder deren Gemische.

5. Verfahren nach Anspruch 1 oder 2, wobei das Monomer eine aliphatische Verbindung ist ausgewählt aus der Gruppe bestehend aus alpha,omega-Dinitril, alpha,omega-Nitrilocarbonsäureamid, alpha,omega-Nitrilocarbonsäure, alpha,omega-Nitrilocarbonsäureester, alpha,omega-Aminonitril oder deren Gemische.

6. Verfahren nach Anspruch 1 oder 2, wobei das Monomer ausgewählt ist aus der Gruppe bestehend aus Adipodinitril, 5-Cyanovaleriansäureamid, 5-Cyanovaleriansäure, Cyanovaleriansäure-C₁-C₄-alkylester, 6-Aminocapronitril oder deren Gemische.

7. Verfahren nach Anspruch 1 oder 2, wobei das Monomer ausgewählt ist aus der Gruppe bestehend aus Adipodinitril, 5-Cyanovaleriansäureamid, 5-Cyanovaleriansäure, 6-Aminocapronitril oder deren Gemische.

8. Verfahren nach den Ansprüchen 3 bis 7, wobei man das Monomer ausgewählt aus der Gruppe bestehend aus Dinitril, Nitrilocarbonsäureamid, Nitrilocarbonsäure, Nitrilocarbonsäureester oder deren Gemische zusammen mit einem Diamin einsetzt, wobei man das molare Verhältnis des genannten Monomers zu dem genannten Diamin im Bereich von 0,9:1 bis 1:0,9 wählt.

9. Verfahren nach Anspruch 8, wobei man als Diamin eine Verbindung ausgewählt aus der Gruppe bestehend aus 1,2-Diaminoethan, 1,3-Diaminopropan, 1,4-Diaminobutan, 1,5-Diaminopentan, 2-Methyl-1,5-diaminopentan, 1,6-Diaminohexan, 1,7-Diaminoheptan, 1,8-Diaminooctan, 1,9-Diaminononan, 1,10-Diaminodecan oder deren Gemische einsetzt.

## Claims

1. A process for preparing a polyamide by reacting a mixture which comprises a monomer which has a nitrile group and has at least one other functional group capable of forming a carboxamide group, and comprises water, in the presence of titanium dioxide as catalyst, which comprises using titanium dioxide whose BET surface area, determined to the German standard DIN 66 131 volumetrically by the multipoint method, is in the range from 5 to 35 m²/g.

2. The process according to claim 1, where the titanium dioxide has a BET surface area in the range from 15 to 35 m²/g.

3. The process according to claim 1 or 2, where the monomer has a nitrile group and, as at least one other functional group capable of forming a carboxamide group, has at least one group selected from the group consisting of nitrile group, carboxamide group, carboxylic acid group, ester group, and amino group.

4. The process according to claim 1 or 2, where the monomer has been selected from the group consisting of dinitrile, nitrilocarboxamide, nitrilocarboxylic acid, nitrilocarboxylic ester, aminonitrile, and mixtures of these.

5. The process according to claim 1 or 2, where the monomer is an aliphatic compound selected from the group consisting of alpha,omega-dinitrile, alpha,omega-nitrilocarboxamide, alpha, omega-nitrilocarboxylic acid, alpha,omega-nitrilocarboxylic ester, alpha,omega-aminonitrile, and mixtures of these.

6. The process according to claim 1 or 2, where the monomer has been selected from the group consisting of adiponitrile, 5-cyanovaleramide, 5-cyanovaleric acid, C₁-C₄-alkyl cyanovalerate, 6-aminocapronitrile, and mixtures of these.

7. The process according to claim 1 or 2, where the monomer has been selected from the group consisting of adiponitrile, 5-cyanovaleramide, 5-cyanovaleric acid, 6-aminocapronitrile, and mixtures of these.

8. The process according to any of claims 3 to 7, where the monomer has been selected from the group consisting of dinitrile, nitrilocarboxamide, nitrilocarboxylic acid, nitrilocarboxylic ester, and mixtures of these and is used together with a diamine, the molar ratio of the monomer mentioned to the diamine mentioned being in the range from 0.9:1 to 1:0.9.

9. The process according to claim 8, where the diamine used comprises a compound selected from the group consisting of 1,2-diaminoethane, 1,3-diaminopropane, 1,4-diaminobutane, 1,5-diaminopentane, 2-methyl-1,5-diaminopentane, 1,6-diaminohexane, 1,7-diaminoheptane, 1,8-diaminooctane, 1,9-diaminononane, 1,10-diaminodecane, and mixtures of these.

## Revendications

1. Procédé de préparation d'un polyamide par réaction d'un mélange qui contient un monomère qui présente un groupe nitrile et au moins un autre groupe fonctionnel susceptible de former un groupe carboxamide, et de l'eau, en présence de dioxyde de titane comme catalyseur, **caractérisé en ce que** le dioxyde de titane présente une surface BET, déterminée selon la norme allemande DIN 66 131 selon la méthode à points multiples au moyen du procédé volumétrique, de l'ordre de 5 à 35 m²/g.

2. Procédé suivant la revendication 1, dans lequel le dioxyde de titane présente une surface BET de l'ordre de 15 à 35 m²/g.

3. Procédé suivant la revendication 1 ou 2, dans lequel le monomère présente un groupe nitrile et, comme au moins un autre groupe fonctionnel susceptible de former un groupe carboxamide, au moins un groupe choisi parmi le groupe constitué des groupes nitrile, amide d'acide carboxylique, acide carboxylique, ester et amino.

4. Procédé suivant la revendication 1 ou 2, dans lequel le monomère est choisi parmi le groupe constitué du dinitrile, d'amide d'acide nitrilocarboxylique, d'acide nitrilocarboxylique, d'ester d'acide nitrilocarboxylique, d'aminonitrile ou de leurs mélanges.

5. Procédé suivant la revendication 1 ou 2, dans lequel le monomère est un composé aliphatique choisi parmi le groupe constitué d'alpha,oméga-dinitrile, d'amide d'acide alpha,oméga-nitrilocarboxylique, d'acide alpha,oméga-nitrilocarboxylique, d'ester d'acide alpha,oméga-nitrilocarboxylique, d'alpha,oméga-aminonitrile ou de leurs mélanges.

6. Procédé suivant la revendication 1, dans lequel le monomère est choisi parmi le groupe constitué d'adipodinitrile, d'amide d'acide 5-cyanovalérianique, d'acide 5-cyanovalérianique, de cyanovalérianate d'alkyle en C₁-C₄, de 6-aminocapronitrile ou de leurs mélanges.

7. Procédé suivant la revendication 1 ou 2, dans lequel le monomère est choisi parmi le groupe constitué d'adipodinitrile, d'amide d'acide 5-cyanovalérianique, d'acide 5-cyanovalérianique, de 6-aminocapronitrile ou de leurs mélanges.

8. Procédé suivant les revendications 3 à 7, dans lequel on met en oeuvre le monomère choisi parmi le groupe constitué de dinitrile, d'amide d'acide nitrolocarboxylique, d'acide nitrilocarboxylique, d'ester d'acide nitrilocarboxylique ou de leurs mélanges conjointement à une diamine, le rapport molaire entre le monomère cité et la diamine citée étant choisi dans la gamme de 0,9/1 à 1/0,9.

9. Procédé suivant la revendication 8, dans lequel, comme diamine, on met en oeuvre un composé choisi parmi le groupe constitué de 1,2-diaminoéthane, de 1,3-diaminopropane, de 1,4-diaminobutane, de 1,5-diaminopentane, de 2-méthyl-1,5-diaminopentane, de 1,6-diaminohexane, de 1,7-diaminoheptane, de 1,8-diaminooctane, de 1,9-diaminononane, de 1,10-diaminodécane ou de leurs mélanges.
